# EUROPEAN PATENT SPECIFICATION

(11) **EP 2 946 667 B1**
(45) Date of publication and mention of the grant of the patent: **31.01.2018**
(21) Application number: 15167476.9
(22) Date of filing: 19.07.2007
(51) Int. Cl.: A22B 7/00, A22C 18/00, G01N 23/00, G01N 33/12, A22B 5/00, A22C 17/00, G01N 23/04

(54) **X-RAY IMAGING APPARATUS FOR DETERMINING A CUTTING PATH OF A CARCASS AND CORRESPONDING METHOD**
RÖNTGENBILDGEBUNGSVORRICHTUNG UND -VERFAHREN ZUR BESTIMMUNG EINES SCHNEIDWEGES EINES KADAVERS
APPAREIL D'IMAGERIE À RAYONS X POUR LA DÉTERMINATION D'UNE TRAJECTOIRE DE COUPE D'UNE CARCASSE ET PROCÉDÉ CORRESPONDANT

(30) Priority: 21.07.2006 NZ 54864806
(43) Date of publication of application: 25.11.2015
(62) Divisional of application: 07808689.9
(73) Proprietor: Robotic Technologies Limited, Dunedin 9011 (NZ)
(72) Inventor: SEATON, Mark Hamish, Dunedin 9011 (NZ); GLENDENNING, Roger William, Dunedin 9011 (NZ)
(74) Representative: Lloyd, Robin

(56) References cited:
- DE-A1-102004 047 773
- US-A- 5 334 084
- US-A- 5 585 603
- RICHARD I HARTLEY ET AL: "Triangulation", 6 September 1995 (1995-09-06), COMPUTER ANALYSIS OF IMAGES AND PATTERNS : 6TH INTERNATIONAL CONFERENCE, CAIP '95, PRAGUE, CZECH REPUBLIC, SEPTEMBER 6 - 8, 1995 ; PROCEEDINGS; [LECTURE NOTES IN COMPUTER SCIENCE , ISSN 0302-9743], SPRINGER, BERLIN, HEIDELBERG, PAGE(S) 190 - 197, XP019180986, ISBN: 978-3-540-60268-2 * abstract *

## Description

### TECHNICAL FIELD

The invention relates to the X-ray imaging of an animal carcass to determine a cutting path for cutting of the carcass. In particular, the invention relates to a method for determining the cutting path for a cutting device by X-ray imaging the carcass from two different perspectives and processing the imaging data to determine a cutting path. The invention also relates to a method of grading carcasses.

### BACKGROUND

There is a general need to automate the processing of animal carcasses into defined cuts. The manual butchering of animal carcasses requires skill and judgement in the manipulation of both meat and tools. Generally, manual butchering methods are able to produce a precisely butchered meat product. However, these methods can be time consuming. Furthermore, the skill and judgement of the butcher can falter, resulting in an inaccurately butchered meat product or injury to the butcher. Human contact with the carcass also increases the risk of bacterial contamination of the meat product.

There has therefore been an effort to automate the butchering of animal carcasses, particularly in large-scale commercial slaughtering/butchering operations. Automated carcass cutting methods have reduced butchering time and butcher injury. However, such systems are typically only capable of making standardised cuts in or through an animal carcass and are often not adapted to take into account variations between different animal carcasses. The main challenge faced by automated carcass cutting technology has been to reproduce the precision of a skilled butcher.

A significant problem preventing the full automation of animal carcass cutting operations has been the ability to sense the correct position on a carcass to make a cut. Current methods for sensing the correct position include manual carcass measuring and vision camera measuring. However, these methods rely on the judgement of an operator or the accuracy of electronic measuring. For the processing of most animal carcasses, bone positions are used to position cuts, and these are generally not visible using traditional sensing methods.

Improved accuracy in animal carcass cutting has the following advantages:
1. The specification of cuts for end users is more easily met.
2. Trimming of excess meat and bone is reduced or eliminated.
3. Cutting of certain features (such as rib bones), which can result in reduced product quality, can be avoided.
4. Yield is maximised because the amount of saleable meat left on scrap features is minimised.
5. Cuts can be biased so that the maximum amount of meat is left on higher value cuts.

X-ray imaging of animal carcasses is a known method for determining the best positions for making cuts to the carcases. Some methods employ the technique of obtaining X-ray images at two different angles to give 3-dimensional coordinates for determining a cutting path.

US 5,205,779 describes a method for X-ray imaging an animal carcass to determine internal anatomical features in 3 dimensions. However, this method suffers from the disadvantage that the carcass must be oriented horizontally on a trolley fixture. Since most animal carcass processing operations have the carcass hanging vertically by the hind hocks from an overhead meat rail conveyor, horizontal X-ray imaging is a significant disadvantage. Removing a carcass from the rail is difficult, and requires a human operator or a costly automated device. Multiple trolleys are necessary for medium to large scale meat processing operations. The trolleys must be cleaned, and must be designed so that the driving mechanism is protected from cleaning fluids. The need for carcasses to be oriented horizontally uses up a significant amount of valuable processing floor-space, and requires a faster line speed to match the throughput of an equivalent vertical system because the carcass pitch will be much greater. The trolleys may interfere with the X-ray signal or require expensive materials and construction techniques. The method requires the trolleys to stop at the start of the imaging zone thereby reducing the potential throughput of the system.

Further, the method described requires two X-ray systems to perform the imaging. This adds to cost, and also means that higher radiation dosages are transmitted. An image intensifier is used to capture the X-ray image. However, image intensifiers are less accurate than digital flat panel detectors. Due to the fan nature of the X-ray beam, the image is distorted in both the vertical and the horizontal planes, whereas use of a linear detector means the distortion is only along the length of the detector. The two X-ray systems are mounted on either side of the carcass. In the case of determining cutting positions relative to ribs, this method is much more difficult and much less accurate than having the systems mounted at either end of the carcass.

WO 97/21352 also describes the use of two X-ray images to determine a 3-dimensional cutting path. However, the method has all the disadvantages of the trolley system described above because the carcass (poultry) is held stationary in a fixture. Two X-ray systems are required to perform the imaging. This is more costly and transmits a higher radiation dosage than a single X-ray system. The imaging is performed at the cutting station. This means that the cutting station will need to be fully enclosed in radiation shielding, and the image processing must be done before any cutting can take place, thereby reducing the time available for processing of the carcass.

It is therefore an object of the invention to provide a method for determining the cutting path for cutting an animal carcass which overcomes or ameliorates one or more of the above disadvantages of known methods, or to at least provide a useful choice.

### STATEMENTS OF INVENTION

The invention is defined by the independent claims. The carcass is preferably hung from a conveyor rail and moved along the conveyor rail to obtain X-ray images from different perspectives. An X-ray image of the carcass may be obtained whilst the carcass is conveyed along a first conveyor track section and the carcass is then conveyed along a loop and rotated through 180 degrees so that on a return path an X-ray image from a different perspective but with the carcass in the same orientation is obtained.

The X-ray source preferably propagates a fan-shaped beam and the X-ray detector is preferably a linear detector so that the carcass is scanned as it moves along the conveyor track through the fan shaped beam.

The spatial configuration of bones of the carcass may be determined based on the X-ray images and the cutting path determined based upon the spatial configuration of the bones. The carcass may be cut using an automated cutting machine based on the cutting path determined.

The carcass is preferably hanging as it passes through the X-ray imaging system.

The X-ray images are captured using a single X-ray source and a single X-ray detector. The X-ray images may also be used to determine attributes of the carcass for grading purposes.

The X-ray source preferably propagates a fan-shaped beam and the X-ray detector is preferably a linear detector.

The carcass moving system is preferably a conveyor track system that moves the carcass whilst it is hanging. This is preferably part of a continuous conveyor track that transfers the carcass to a cutting station which segments the carcass.

There is further provided a method of grading a carcass which does not form part of the invention, the method comprising the steps of:
a. acquiring an X-ray image of a carcass; and
b. calculating the weight of a section of the carcass based on X-ray intensity over a section of the X-ray image.

It is preferred that the animal carcass is the carcass of a quadruped animal such as a bovine cow, a sheep, a goat, a pig, or a deer.

### BRIEF DESCRIPTION OF FIGURES

The accompanying drawings which are incorporated in and constitute part of the specification, illustrate embodiments of the invention and, together with the general description of the invention given above, and the detailed description of embodiments given below, serve to explain the principles of the invention.
**Figure 1** is a schematic plan view of an X-ray imaging apparatus; and
**Figure 2** is a side view illustrating the imaging of an animal carcass.

### DETAILED DESCRIPTION

The invention relates to a method for determining a cutting path for the cutting of an animal carcass using a cutting device and to an apparatus for effecting the method. The invention may be used for a wide range of quadruped animal carcasses, but is particularly suited to bovine cow, sheep, goat, pig and deer carcasses.

The animal carcass is preferably hung during processing, typically it is held by its hind hocks from a conveyor rail. While a system may be employed where animal carcasses are not hung, there are advantages with a system where the carcasses hang from a standard overhead chain conveyor as typically found in meat processing facilities. This facilitates easy integration of the imaging system of the invention into conventional carcass processing operations, and enables high-speed throughput to match the processing rate. For example, X-ray imaging systems requiring a full body scan using a linear detector that covers the width of the body and traverses its length are typically slow.

In preferred embodiments of the invention, the same X-ray system is used to acquire both images. The method therefore requires only a single X-ray source and a single X-ray detector. While any suitable X-ray beam shape may be used, the X-ray beam is preferably a vertical fan-shaped beam to minimize unnecessary radiation (as would be present using a cone beam). It is also preferred that the detector is a digital linear detector.

X-ray images are preferably taken from different perspectives to determine the spatial configuration of elements of the carcass. Typically the spatial configuration of the bones of the carcass is determined to determine a cutting path between bones of the carcass. However, the configuration of other elements of the carcass, such as muscle or fat, may also be determined to determine a cutting path. Images may be obtained from different perspectives by shifting the carcass to a different position (higher and closer to the detector) within the fan beam. For any one point on the carcass, between first and second X-ray images, being acquired the X-ray beam passing through that point will be at a different angle (closer to vertical for the image of the carcass in the higher position). This represents an important advantage because only one set of X-ray hardware (X-ray source and detector) is used. The cost of a single hardware system is therefore lower than for a system having multiple sets of X-ray hardware, and a system having only one hardware set has lower levels of radiation that must be shielded against.

In a typical imaging operation, the X-ray beam is oriented at an angle about an imaginary vertical axis to the conveying direction, for example 75 degrees. This enables better image definition for a few key points on the carcass - particularly the forequarter region - that are otherwise difficult to see on the X-ray image due to the density and thickness of that region of a carcass.

The invention also has the advantage that the only moving part (other than the simple stabilisation mechanism) is the movement of carcasses along on the conveyor, which occurs in conventional processing systems anyway.

It will be appreciated that the imaging process is typically part of a meat processing operation where the carcass moves to a carcass cutting stage once the X-ray imaging steps have taken place. Further, cutting of the carcass may occur in more than one cutting stages. For example, the carcass may be transported to a first cutting stage for one predetermined cutting operation, and then to a second cutting stage for a second cutting operation, and then to a third cutting stage, and so on.

The continuous processing operation preferably includes a conveyor system where animal carcasses are hung by their hocks from a conveyor rail. Each animal carcass is transported from a site of X-ray imaging to a site of X-ray re-imaging. To enable the use of a single X-ray system for both imaging and re-imaging steps, the operation will have a means for moving the carcass so that it is exposed to the X-ray beam at different angle for the re-imaging step. This can conveniently be achieved by transporting the carcass from the site of X-ray imaging to the site of X-ray re-imaging through a loop in the conveyor of 180 degrees about an imaginary vertical axis to enable use of the same X-ray source and detector for both X-ray imaging and re-imaging. During transport from the site of X-ray imaging to the site of X-ray re-imaging, the carcass is turned by 180 degrees relative to the conveyor, about an imaginary vertical axis, so that the carcass is facing the same direction when the X-ray imaging and re-imaging steps are taking place.

The invention is described with reference to the example described below. However, it is to be appreciated that the invention is not in any way limited to this example.

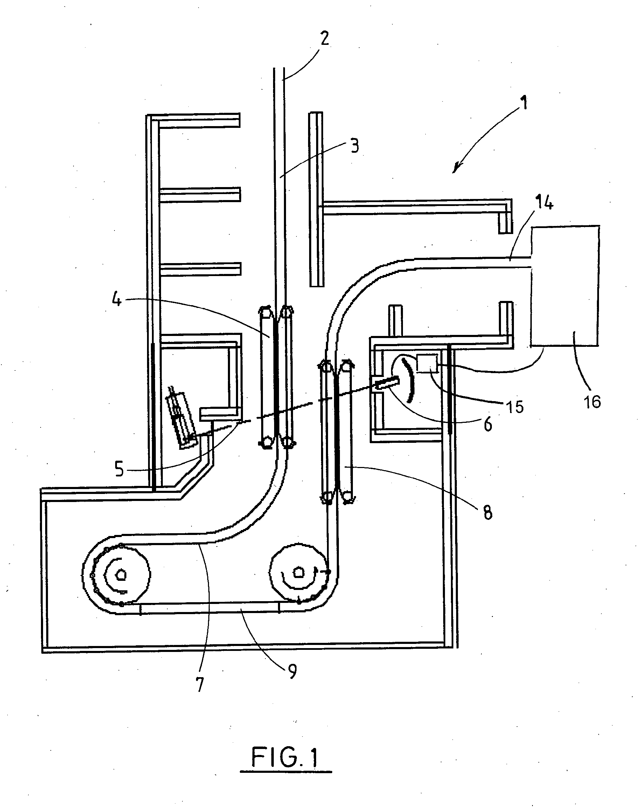

Referring firstly to Figure 1, an animal carcass (not shown) enters the animal processing system (1) at conveyor infeed (2) hanging from an overhead meat rail conveyor (3). The conveyor (3) is designed to accommodate a continuous line of spaced apart carcasses travelling along the conveyor (3). The orientation of the carcass is maintained by a "rub rail" (not shown), which the carcass hocks come into contact with if the carcass starts to turn. The carcass passes through a first stabiliser (4), which applies pressure to the sides of the hind hocks to dampen any carcass swing. When located in the first stabiliser (4), the carcass passes through an X-ray beam (5). A detector (6) collects a first image of the carcass and transmits this to a computer (15) for processing. After passing through the first stabiliser (4) and before passing through the second stabiliser (8), the carcass is turned 180 degrees in a carcass turning zone (7) by means of a complex profiled section of the hock rub rail. The carcass is turned so that when it passes through the X-ray beam (5) for the second time (when located in a second stabiliser (8)) the carcass has the same orientation as when it first passed through the X-ray beam. The carcass then passes through a second stabiliser (8), which is located in the system (1) so that when the carcass passes through the second stabiliser (8), it also passes through the same X-ray beam (5) to enable a second X-ray image to be taken and transmitted to the computer.

The movement of carcasses along the conveyor (3) is synchronised so that when a carcass passes through one of the first stabilisers (4 and 8), there is no carcass located in the other stabiliser (4 and 8). Thus, the X-ray beam sees only one carcass at any time.

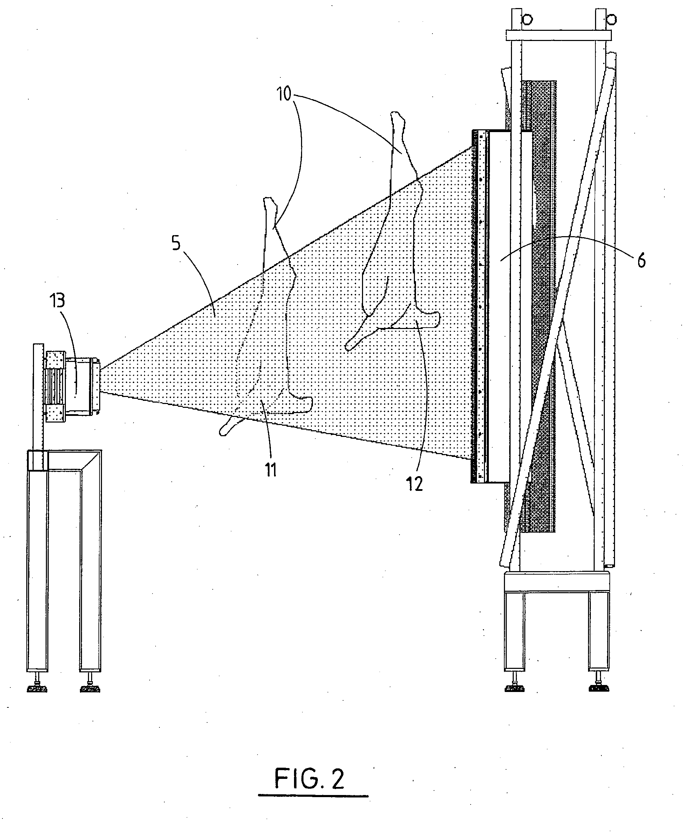

The carcass travels up a conveyor incline zone (9) so that the carcass is at a different height when it passes through the X-ray beam (5) for the second time. The height difference is shown in Figure 2 where an animal carcass (10) is shown at a first position (11), when in the first stabiliser (4), and at a second position (12), when in the second stabiliser (8). In this way, a single X-ray source (13) and single detector (6) is all that is needed to obtain two X-ray images of the same carcass which can then be processed to determine for a cutting path specific for that carcass.
The first and second images are processed by computer (15) to produce a cutting path by identifying key features from each image and matching them. The carcass, once X-ray imaged for the second time, travels along the conveyor (3), and from the conveyor outfeed (14), is transported to a carcass segmenting system (16). A cutting device of the carcass segmenting system is in communication with computer (15). Computer (15) transmits cutting path data to the carcass segmenting system which then cuts the carcass along the predetermined cutting path. This may be a simple cut height calculation through to a complex three dimensional cutting path. The cut carcass may be transported to other cutting devices in turn to undergo sequential cutting operations.
Exemplary methods of image processing conducted by computer 15 will now be described in more detail. To calculate the cut planes for the primal cuts two X-ray images are required. The images of the carcass are taken from different perspectives to allow calculation of three dimensional positional data. Each image is analysed separately to locate the ribs and particular features of the aitch bone. A single point of the carcass is then identified on each image and the two views of that point are combined to get its three dimensional coordinates. Multiple three dimensional points can be calculated to determine the spatial configuration of the bones in space. The origin in the three dimensional space is chosen to be the top of one of the meat rails. The location of the other rail, the point source of the X-ray beam, and the top and bottom of the X-ray detector, must be known quite accurately. These measurements are parameters of the analysis program as is the number of pixels in the detector.

For a given point of the carcass, the row where it appears in each image must be determined. This is precisely related to a particular element of the detector, which is converted to a point in space based on the measured geometry of the system. The position of a virtual X-ray source and detector for one scan is calculated by translating the reference point on that rail to the reference point of the other. The ray from the source to the point on the detector from one image is intersected with the ray from the virtual source to the point on the virtual detector for the other image. This will give the height and distance from the source (depth). The other dimension (width) can be calculated by defining a reference point on the carcass and knowing the speed which the carcass travels along the rail.

Image processing techniques may be applied to determine the spatial configuration of bones of the carcass. A cutting path may be determined based on this information and communicated to a cutting machine to execute the cuts. The cutting path may be a simple height setting through to a three dimensional cutting path.

X-ray image information may also be used for grading purposes. In one embodiment the weight of the whole or parts of the carcass (e.g. the three primal sections - forequarter, middle and hindquarter) is calculated in order to assess the monetary value of the carcass based on the average value per kilogram of the whole carcass, or each carcass section. As X-ray intensity is related to the thickness and density of the portion of the carcass in the path of the X-ray beam, X-ray intensity may be used to estimate the weight of a carcass. Using a single X-ray image the intensity of each pixel within the outline of a section of the carcass may be used to predict the weight of the region viewed in the pixel. The predicted weights of all the pixels within the image may then be summed to produce an estimate of the weight of each section of the carcass. This estimated weight may be multiplied by the value per kilogram of each section to determine a monetary value for each carcass section.

There is thus provided a method and system enabling imaging and processing to be performed in a continuous conveyor operation. Only a single X-ray source and a single X-ray detector is required - reducing complexity, cost and radiation exposure. As the carcass is moved relative to the imaging system it can be easily and inexpensively implemented in existing processing works.

Although the invention has been described by way of example, it should be appreciated that variations and modifications may be made without departing from the scope of the invention. Furthermore, where known equivalents exist to specific features, such equivalents are incorporated as if specifically referred to in the specification.

The application further discloses examples which do not form part of the invention:
1. A method of determining a cutting path including the steps of:
   a. obtaining X-ray images of at least part of a hanging carcass from different perspectives;
   b. determining the spatial configuration of elements of the carcass based on the X-ray images to obtain spatial information; and
   c. determining a cutting path for cutting the carcass based on the spatial information.
2. A method as defined in paragraph 1 wherein the X-ray images are captured using a single X-ray source and a single X-ray detector.
3. A method as defined in paragraph 2 wherein the carcass is moved to obtain X-ray images from different perspectives.
4. A method as defined in paragraph 3 wherein the carcass is moved to be at a different distance from the X-ray source and a different height when the X-ray images are obtained.
5. A method as defined in any one of paragraphs 1 to 4 wherein the carcass is hung from a conveyor rail and is moved along the conveyor rail to obtain X-ray images from different perspectives.
6. A method as defined in paragraph 5 wherein an X-ray image of the carcass is obtained whilst the carcass is conveyed along a first conveyor track section and the carcass is then conveyed along a loop and rotated through 180 degrees so that on a return path an X-ray image from a different perspective but with the carcass in the same orientation is obtained.
7. A method as defined in paragraphs 5 and 2 wherein the X-ray source propagates a fan-shaped beam and the X-ray detector is a linear detector so that the carcass is scanned as it moves along the conveyor track through the fan shaped beam.
8. A method as defined in any one of paragraphs 1 to 7 wherein the spatial configuration of bones of the carcass is determined based on the X-ray images.
9. A method as defined in paragraph 8 wherein the cutting path is determined based upon the spatial configuration of the bones.
10. A method as defined in paragraph 9 wherein the cutting path has one degree of freedom.
11. A method as defined in paragraph 9 wherein the cutting path has multiple degrees of freedom.
12. A method as defined in paragraph 2 wherein the X-ray source and X-ray detector are moved relative to the carcass to obtain images of the carcass from different perspectives.
13. A method as defined in any one of paragraphs 1 to 12 including the step of cutting the carcass using an automated cutting machine based on the cutting path determined.
14. A method as defined in paragraph 13 wherein the carcass is conveyed along a continuous conveyor track throughout all operations.

The application also discloses:
15. A method of producing a spatial image of elements of a carcass including the steps of:
   a. moving a carcass through an X-ray imaging system along a first path to obtain a first X-ray image;
   b. moving a carcass through the X-ray imaging system along a second path, different to the first path, to obtain a second X-ray image from a different perspective to the first X-ray image;
   c. developing a spatial model of elements of the carcass based on the first and second images.
16. A method as defined in paragraph 15 wherein the carcass is hanging as it passes through the X-ray imaging system.
17. A method as defined in paragraph 15 or paragraph 16 wherein the X-ray images are captured using a single X-ray source and a single X-ray detector.
18. A method as defined in paragraph 17 wherein the X-ray source produces a fan-shaped beam.
19. A method as defined in paragraph 18 wherein the X-ray detector is a linear detector.
20. A method as defined in any one of paragraphs 1 to 19 wherein the carcass is the carcass of a quadruped animal.
21. A method as defined in paragraph 20 where the quadruped animal is a bovine cow, a sheep, a goat, a pig, or a deer.
22. A method as defined in any one of paragraphs 1 to 21 wherein the X-ray images are used to determine attributes of the carcass for grading purposes.

The application also discloses:
23. An imaging apparatus comprising:
   a. an X-ray imaging system;
   b. a carcass moving system for moving a carcass to a first position with respect to the imaging system to obtain a first X-ray image and to move the carcass to a second position, different to the first position, with respect to the imaging system to obtain a second X-ray image; and
   c. a processor for determining spatial information for carcass elements based on the first and second X-ray images.
24. An imaging apparatus as defined in paragraph 23 wherein the imaging system includes an X-ray source that propagates a fan-shaped beam.
25. An imaging apparatus as defined in paragraph 23 or pargraph 24 wherein the imaging system includes a linear detector.
26. An imaging apparatus as defined in any one of paragraphs 23 to 25 wherein the carcass moving system moves the carcass whilst it is hanging.
27. An imaging apparatus as defined in any one of paragraphs 23 to 26 wherein the carcass moving system is a conveyor track system.
28. An imaging apparatus as defined in paragraph 27 wherein the carcass moving system includes:
   a. a first section of conveyor track positioned with respect to the imaging system to enable a first X-ray image to be acquired from a first perspective;
   b. a second section of track to move the carcass with respect to the imaging system to enable a second X-ray image to be acquired from a second perspective;
   c. a loop section of conveyor track connecting the first and second sections of conveyor track; and
   d. a 180 degree rotation mechanism in the loop section to rotate the carcass 180 degrees about the vertical axis.

The application also discloses:
29. A carcass segmenting system comprising:
   a. an imaging apparatus as defined in any one of paragraphs 23 to 28 wherein the processor determines cutting path data based on the spatial configuration of the carcass elements; and
   b. an automated cutting machine which receives the cutting path data from the processor and cuts a carcass in accordance with the cutting path data.
30. A system as defined in paragraph 29 wherein a conveyor track provides a continuous path for a carcass to be processed through the imaging system to the cutting machine.
31. A method as defined in any one of paragraphs 1 to 22 including the step of calculating the weight of the whole, or a section of the carcass based on X-ray intensity over a section of an X-ray image.
32. A method as defined in paragraph 31 wherein the section is a forequarter, middle or hindquarter section.
33. A method as defined in paragraph 31 or 32 wherein the weight of a section of the carcass is determined based on a calculation of the intensity of the X-ray image on a pixel by pixel basis.
34. A method as defined in paragraph 31 wherein the section is an entire carcass.
35. A method as defined in paragraph 34 wherein the weight of the entire carcass is determined based on a calculation of the intensity of the X-ray image on a pixel by pixel basis.
36. A method as defined in any one of paragraphs 31 to 35 wherein a monetary value of the carcass is calculated based on the weight of a section and the value per kilogram of that section.

## Claims

1. A method of determining a cutting path including the steps of:
a. using a single non-moving X-ray source (13) and a single non-moving linear X-ray detector (6) to obtain a first X-ray image of a hanging carcass (10);
b. moving said carcass (10) to be at a different height and distance from said single X-ray source (13);
c. using said single non-moving X-ray source (13) and said single non-moving linear X-ray detector (6) to obtain a second X-ray image of said carcass (10) from the different perspective;
d. determining the spatial configuration of elements of the carcass based on the first and second X-ray images to obtain spatial information; and
e. determining a cutting path for cutting the carcass based on the spatial configuration of the elements of the carcass.

2. A method as claimed in claim 1 wherein the carcass is hung from a conveyor rail and is moved along the conveyor rail to obtain X-ray images from different perspectives.

3. A method as claimed in claim 2 wherein an X-ray image of the carcass is obtained whilst the carcass is conveyed along a first conveyor track section and the carcass is then conveyed along a loop and rotated through 180 degrees so that on a return path an X-ray image from a different perspective but with the carcass in the same orientation is obtained.

4. A method as claimed in any one of claims 1 to 3 including the step of calculating the weight of the whole, or a section of the carcass based on X-ray intensity over a section of an X-ray image.

5. A method as claimed in claim 4 wherein the weight of a section of the carcass (10) is determined based on a calculation of the intensity of the X-ray image on a pixel by pixel basis.

6. An imaging apparatus comprising:
a. A single non-moving X-ray source (13);
b. A single non-moving linear X-ray detector (6) spaced apart from the X-ray source (13) and positioned to receive a beam generated by the X-ray source (13);
c. a carcass moving system (2, 3, 4, 7, 8, 9, 14) for moving a carcass between said single X-ray source (13) and said single X-ray detector (6) to enable a first X-ray image to be obtained from a first perspective and to move the carcass to a different height and distance from the X-ray source (13) to enable a second X-ray image to be obtained from a second perspective; and
d. a processor (15) for determining the spatial configuration of carcass elements based on the first and second X-ray images and for determining a cutting path for cutting the carcass based on the spatial configuration of the elements of the carcass.

7. An imaging apparatus as claimed in claim 6 wherein the carcass moving system includes:
a. a first section of conveyor track (3) positioned with respect to the imaging system (6, 13, 15) to enable a first X-ray image to be acquired from a first perspective;
b. a second section of track to move the carcass with respect to the imaging system (6, 13, 15) to enable a second X-ray image to be acquired from a second perspective;
c. a loop section of conveyor track (7) connecting the first and second sections of conveyor track; and
d. a 180 degree rotation mechanism in the loop section (7) to rotate the carcass (10) 180 degrees about the vertical axis.

8. A carcass segmenting system comprising:
a. an imaging apparatus as claimed in any one of claims 6 and 7; and
b. an automated cutting machine (16) which receives the cutting path data from the processor (15) and cuts a carcass (10) in accordance with the cutting path data.

## Patentansprüche

1. Verfahren zum Bestimmen eines Zerlegungswegs, umfassend die folgenden Schritte:
a. Verwenden einer einzigen nicht beweglichen Röntgenquelle (13) und eines einzigen nicht beweglichen linearen Röntgendetektors (6) zum Erhalten eines ersten Röntgenbilds eines hängenden Schlachtkörpers (10);
b. Bewegen des Schlachtkörpers (10) auf eine andere Höhe und Entfernung von der einzigen Röntgenquelle (13);
c. Verwenden der einzigen nicht beweglichen Röntgenquelle (13) und des einzigen nicht beweglichen linearen Röntgendetektors (6) zum Erhalten eines zweiten Röntgenbilds des Schlachtkörpers (10) aus der anderen Perspektive;
d. Bestimmen der räumlichen Konfiguration von Elementen des Schlachtkörpers anhand des ersten und zweiten Röntgenbilds zum Erhalten von räumlichen Informationen und
e. Bestimmen eines Zerlegungswegs zum Zerlegen des Schlachtkörpers auf der Grundlage der räumlichen Konfiguration der Elemente des Schlachtkörpers.

2. Verfahren nach Anspruch 1, wobei der Schlachtkörper von einer Förderleiste gehängt und die Förderleiste entlang bewegt wird, um Röntgenbilder aus unterschiedlichen Perspektiven zu erhalten.

3. Verfahren nach Anspruch 2, wobei ein Röntgenbild des Schlachtkörpers erhalten wird, während der Schlachtkörper entlang eines ersten Förderbahnabschnitts befördert wird und der Schlachtkörper daraufhin eine Schleife entlang befördert und um 180° rotiert wird, so dass auf einem Rückweg ein Röntgenbild aus einer anderen Perspektive, aber mit dem Schlachtkörper in der gleichen Ausrichtung erhalten wird.

4. Verfahren nach einem der Ansprüche 1 bis 3, umfassend den Schritt Berechnen des Gewichts des ganzen Schlachtkörpers oder eines Abschnitts des Schlachtkörpers auf der Grundlage der Röntgenintensität über einen Abschnitt eines Röntgenbilds.

5. Verfahren nach Anspruch 4, wobei das Gewicht eines Abschnitts des Schlachtkörpers (10) anhand einer pixelweisen Berechnung der Intensität des Röntgenbilds bestimmt wird.

6. Bildgebende Vorrichtung, umfassend:
a. eine einzige nicht bewegliche Röntgenquelle (13);
b. einen einzigen nicht beweglichen linearen Röntgendetektor (6), der sich in einer Entfernung von der Röntgenquelle (13) befindet und dazu positioniert ist, einen von der Röntgenquelle (13) erzeugten Strahl zu empfangen;
c. ein Schlachtkörperbewegungssystem (2, 3, 4, 7, 8, 9, 14) zum Bewegen eines Schlachtkörpers zwischen der einzigen Röntgenquelle (13) und dem einzigen Röntgendetektor (6), damit ein erstes Röntgenbild aus einer ersten Perspektive erhalten werden kann, und zum Bewegen des Schlachtkörpers auf eine andere Höhe und Entfernung von der Röntgenquelle (13), damit ein zweites Röntgenbild aus einer zweiten Perspektive erhalten werden kann; und
d. einen Prozessor (15) zum Bestimmen der räumlichen Konfiguration von Schlachtkörperelementen anhand des ersten und zweiten Röntgenbilds und zum Bestimmen eines Zerlegungswegs zum Zerlegen des Schlachtkörpers auf der Grundlage der räumlichen Konfiguration der Elemente des Schlachtkörpers.

7. Bildgebende Vorrichtung nach Anspruch 6, wobei das Schlachtkörperbewegungssystem Folgendes umfasst:
a. einen ersten Abschnitt einer Förderbahn (3), der bezüglich des bildgebenden Systems (6, 13, 15) so positioniert ist, dass ein erstes Röntgenbild aus einer ersten Perspektive gewonnen werden kann;
b. einen zweiten Abschnitt einer Bahn zum Bewegen des Schlachtkörpers bezüglich des bildgebenden Systems (6, 13, 15), so dass ein zweites Röntgenbild aus einer zweiten Perspektive gewonnen werden kann;
c. einen Schleifenabschnitt der Förderbahn (7), der den ersten und zweiten Abschnitt der Förderbahn verbindet; und
d. einen 180-Grad-Rotationsmechanismus in dem Schleifenabschnitt (7) zum Rotieren des Schlachtkörpers (10) um 180° um die vertikale Achse.

8. Schlachtkörpersegmentierungssystem, umfassend:
a. eine bildgebende Vorrichtung nach einem der Ansprüche 6 und 7 und
b. eine automatisierte Zerlegungsmaschine (16), die die Zerlegungswegsdaten von dem Prozessor (15) empfängt und einen Schlachtkörper (10) gemäß den Zerlegungswegsdaten zerlegt.

## Revendications

1. Procédé pour déterminer un trajet de découpe, comprenant les étapes suivantes :
a. utiliser une source de rayons X non mobile unique (13) et un détecteur de rayons X non mobile linéaire unique (6) pour obtenir une première image radiographique d'une carcasse suspendue (10) ;
b. déplacer ladite carcasse (10) pour qu'elle soit à une hauteur et une distance différente de ladite source de rayons X unique (13) ;
c. utiliser ladite source de rayons X non mobile unique (13) et ledit détecteur de rayons X non mobile unique (6) pour obtenir une seconde image radiographique de ladite carcasse (10) depuis une perspective différente ;
d. déterminer la configuration spatiale d'éléments de la carcasse en fonction des première et seconde images radiographiques pour obtenir des informations spatiales ; et
e. déterminer un trajet de découpe afin de découper la carcasse en fonction de la configuration spatiale des éléments de la carcasse.

2. Procédé selon la revendication 1, dans lequel la carcasse est suspendue à un rail de transport et est déplacée le long du rail de transport pour obtenir des images radiographiques depuis différentes perspectives.

3. Procédé selon la revendication 2, dans lequel une image radiographique de la carcasse est obtenue pendant que la carcasse est transportée le long d'une première section de piste de transport, après quoi la carcasse est transportée le long d'une boucle et tournée à 180 degrés de sorte que, sur un trajet de retour, une image radiographique depuis une perspective différente mais avec la carcasse dans la même orientation soit obtenue.

4. Procédé selon l'une quelconque des revendications 1 à 3, comprenant une étape consistant à calculer le poids de l'ensemble ou d'une section de la carcasse en fonction de l'intensité des rayons X sur une section d'une image radiographique.

5. Procédé selon la revendication 4, dans lequel le poids d'une section de la carcasse (10) est déterminé en fonction d'un calcul de l'intensité de l'image radiographique sur une base de pixel par pixel.

6. Appareil d'imagerie comprenant :
a. une source de rayons X non mobile unique (13) ;
b. un détecteur de rayons X non mobile unique linéaire (6) espacé de la source de rayons X non mobile unique (13) et positionné pour recevoir un faisceau généré par la source de rayons X non mobile unique (13) ;
c. un système de déplacement de carcasse (2, 3, 4, 7, 8, 9, 14) pour déplacer une carcasse entre ladite source de rayons X unique (13) et ledit détecteur de rayons X unique (6) pour pouvoir obtenir une première image radiographique à partir d'une première perspective, et pour déplacer la carcasse à une hauteur et une distance différentes de la source de rayons X (13) pour pouvoir obtenir une seconde image radiographique à partir d'une seconde perspective ; et
d. un processeur (15) pour déterminer la configuration spatiale d'éléments de carcasse en fonction des première et seconde images radiographiques et pour déterminer un trajet de découpe afin de découper la carcasse en fonction de la configuration spatiale des éléments de la carcasse.

7. Appareil d'imagerie selon la revendication 6, dans lequel le système de déplacement de carcasse comprend :
a. une première section de piste de transport (3) positionnée par rapport au système d'imagerie (6, 13, 15) de façon à pouvoir acquérir une première image radiographique depuis une première perspective ;
b. une seconde section de piste pour déplacer la carcasse par rapport au système d'imagerie (6, 13, 15) de façon à pouvoir acquérir une seconde image radiographique depuis une seconde perspective ;
c. une section boucle de piste de transport (7) connectant les première et seconde sections de la piste de transport ; et
d. un mécanisme de rotation à 180 degrés dans la section boucle (7) pour faire tourner la carcasse (10) sur 180 degrés autour de l'axe vertical.

8. Système de segmentation de carcasse comprenant :
a. un appareil d'imagerie selon l'une quelconque des revendications 6 et 7 ; et
b. une machine de découpe automatisée (16) qui reçoit des données de trajet de découpe depuis le processeur (15) et découpe la carcasse (10) en fonction des données de trajet de découpe.
